(19) Europäisches Patentamt
European Patent Office
Office européen des brevets

(11) **EP 3 175 532 B1**

(12) **FASCICULE DE BREVET EUROPEEN**

(45) Date de publication et mention
de la délivrance du brevet:
**04.09.2019 Bulletin 2019/36**

(21) Numéro de dépôt: **15759838.4**

(22) Date de dépôt: **30.06.2015**

(51) Int Cl.:
*H02J 7/14* (2006.01)     *H02M 3/00* (2006.01)
*B60L 1/00* (2006.01)

(86) Numéro de dépôt international:
**PCT/FR2015/051781**

(87) Numéro de publication internationale:
**WO 2016/016530 (04.02.2016 Gazette 2016/05)**

(54) **PROCÉDÉ ET SYSTÈME DE COMMANDE D'UN CONVERTISSEUR CONTINU CONTINU RÉVERSIBLE D'UN VÉHICULE AUTOMOBILE**

VERFAHREN UND SYSTEM ZUR STEUERUNG EINES UMKEHRBAREN GLEICHSTROM-GLEICHSTROM-WANDLERS EINES KRAFTFAHRZEUGS

METHOD AND SYSTEM FOR CONTROLLING A REVERSIBLE DC-DC CONVERTER OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2014 FR 1457523**

(43) Date de publication de la demande:
**07.06.2017 Bulletin 2017/23**

(73) Titulaire: **Renault S.A.S.**
**92100 Boulogne-Billancourt (FR)**

(72) Inventeur: **MALOUM, Abdelmalek**
**94550 Chevilly Larue (FR)**

(56) Documents cités:
**EP-A2- 1 657 807     WO-A2-2013/182784**
**JP-A- 2006 174 567**

**Description**

L'invention a pour domaine technique la commande des groupes motopropulseurs à machine électrique, et plus particulièrement la commande des convertisseurs continu-continu de tels groupes motopropulseurs.

Les constructeurs automobiles recherchent continuellement des solutions technologiques qui permettraient de réduire les émissions de dioxyde de carbone.

Compte tenu des développements technologiques effectifs, il apparaît que la poursuite de la réduction des émissions de dioxyde de carbone passe par l'électrification des groupes motopropulseurs.

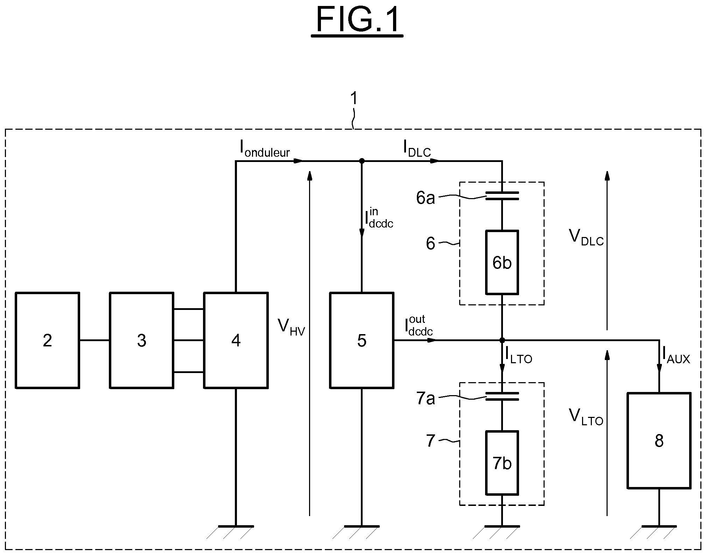

L'utilisation de systèmes d'hybridation à faible coût appelés SED (acronyme anglais pour « Small Electric Device », « petits dispositifs électriques » en langue française) s'inscrit totalement dans cette stratégie. Par exemple, le document WO 2013/182784 A2 se rapporte à un procédé de pilotage d'un convertisseur continu-continu d'un système de stockage et de restitution d'énergie électrique. Cette technologie est illustrée par la figure 1 qui comprend un moteur à combustion interne référencé 2 et une machine électrique 3, connectée électriquement à un onduleur (« inverter » en langue anglaise) référencé 4. L'onduleur 4 est connecté d'une part à la masse et d'autre part à un convertisseur continu-continu référencé 5 (« Direct Curent Converter » en langue anglaise). Un tel convertisseur peut être apte à convertir une tension de 48V en tension de 14V et réciproquement. Le convertisseur continu-continu 5 est également connecté à la masse. En parallèle de la connexion au convertisseur continu-continu 5, l'onduleur 4 est connecté à une batterie à haute tension référencée 6. Une telle batterie à haute tension 6 est électriquement équivalente à l'association en série d'une capacité double couche 6a et d'une résistance interne 6b. La batterie à haute tension peut être une batterie au lithium d'une capacité de 150Wh.

La sortie de la résistance interne 6b est connectée à la sortie du convertisseur continu-continu 5, à l'entrée d'une batterie à basse tension 7 et à l'entrée des dispositifs auxiliaires référencés 8, connectés par ailleurs à la masse. La batterie à basse tension 7 est électriquement équivalente à l'association en série d'une capacité 7a à base d'oxyde de titanate de lithium et d'une résistance interne 7b, la résistance interne 7b étant connectée à la masse. La batterie à basse tension peut être une batterie de 14V.

La machine électrique 3 et l'onduleur 4 remplacent l'alternateur communément installé dans les véhicules automobiles. Un tel système électrotechnique, couplé au moteur à combustion interne 2, permet l'alimentation du réseau de bord avec une tension de 14V, un redémarrage dit « stop/start » (il est à noter que le premier démarrage est toujours assuré par le démarreur conventionnel), une optimisation énergétique, par répartition du couple de traction entre les deux organes moteurs, une récupération et un stockage d'énergie au levé de pied et au freinage, ainsi qu'une augmentation du brio en accélération.

Afin de garantir une meilleure utilisation de l'énergie, le convertisseur continu-continu 5 classique réversible, situé entre les deux batteries 6,7 et l'onduleur 4, est utilisé pour gérer la régulation de la tension $V_{LTO}$ du réseau basse tension dans un sens ou de la tension $V_{HV}$ aux bornes de l'onduleur dans l'autre sens.

De façon générale, le procédé de commande décrit par cette invention, permet la régulation en tension du convertisseur continu-continu 5 réversible. En d'autres termes, on régule toujours la puissance du convertisseur continu-continu 5. Toutefois, si on veut charger la batterie à basse tension 7, la commande sera la tension de sortie du convertisseur continu-continu 5 $V_{lto}$, au travers d'une consigne de tension $V_{lto}{}^{\#}$. Dans l'autre cas, si on désire alimenter la machine électrique au travers de la décharge de la batterie à haute tension 6, la commande sera la tension en entrée du convertisseur continu-continu 5 $V_{hv}$ au travers d'une consigne de tension $V_{hv}{}^{\#}$.

La principale difficulté de cette régulation réside dans le fait que la Loi de Gestion Energétique LGE du véhicule, transmet une première consigne de puissance de référence à réaliser $P_{dcdc}^{\#} = \left(V_{lto} I_{dcdc}^{out}\right)^{\#}$ dans un sens (cas de la charge batterie) et une deuxième consigne de puissance de référence à réaliser $P_{dcdc}^{\#} = \left(V_{hv} I_{dcdc}^{in}\right)^{\#}$ dans l'autre sens (cas de la décharge batterie). De ce fait et vu que le convertisseur continu-continu 5 est régulé en tension, la consigne de tension envoyée au convertisseur continu-continu 5 n'est autre qu'une puissance qui est divisée par le courant de sortie du convertisseur $I_{dcdc}^{out}$ dans un cas, ou par le courant d'entrée du convertisseur $I_{dcdc}^{in}$ dans l'autre cas. Toutefois, quand le courant de sortie du convertisseur ou le courant d'entrée du convertisseur s'annule, il apparait une singularité qui doit être prise en compte dans la commande.

De la figure 1, on en déduit le système d'équations suivant :

$$\begin{cases} V_{hv}I_{dcdc}^{in} = \mu V_{lto}I_{dcdc}^{out} \\ P_{aux} = V_{lto}I_{aux} \\ P_{elec} = V_{hv}I_{onduleur} \\ P_{dcdc} = V_{lto}I_{dcdc}^{out} \\ I_{onduleur} = I_{dcdc}^{in} + I_{dlc} \\ I_{dcdc}^{out} + I_{dlc} = I_{lto} + I_{aux} \end{cases}$$

$$(Eq. 1)$$

Avec :

$\mu$ le rendement du convertisseur continu-continu

$V_{lto}$: la tension de la batterie à basse tension comprise entre $V_{lto}^{min} = 11V$ et $V_{lto}^{max} = 18V$ ;

$V_{dlc}$ : la tension de la batterie à haute tension ;

$V_{hv} = V_{dlc} + V_{lto}$ est la tension aux bornes de l'onduleur, variant entre $V_{hv}^{min} = 36V$ et $V_{hv}^{max} = 60V$ ;

$I_{onduleur}$ : le courant fourni par l'onduleur, considéré comme une entrée exogène (perturbation);
$I_{dlc}$ : le courant qui traverse la batterie à haute tension ;

$I_{dcdc}^{in}$ : le courant en entrée du convertisseur continu-continu 5 ;

$I_{dcdc}^{out}$ : le courant en sortie du convertisseur continu-continu 5 ;

$I_{lto}$ : le courant qui traverse la batterie à basse tension ;
$OCV_{lto}$ : la tension en circuit ouvert (open circuit voltage) de la batterie à basse tension ;
$OCV_{dlc}$ : la tension en circuit ouvert (open circuit voltage) de la batterie à haute tension ;
$R_{lto}$ : la résistance électrique de la batterie basse tension;
$R_{dlc}$ : la résistance électrique de la batterie à haute tension ;
$I_{aux}$ : le courant demandé par les auxiliaires, considéré aussi comme une entrée exogène (perturbation);

De l'état de la technique, on connaît le document WO2009-074604 qui décrit une stratégie de contrôle d'un convertisseur continu continu en courant et non en tension. Le convertisseur continu continu régulé en tension est moins cher que celui qui est régulé en courant. Par contre, le convertisseur continu continu régulé en tension possède une singularité, quand le courant du convertisseur continu continu s'annule, ce qui rend sa commande difficile.

Il existe un besoin pour un procédé de commande en tension d'un convertisseur continu-continu, apte à réaliser les fonctions de démarrage dit « stop&start », d'amélioration du brio en accélération, de récupération d'énergie et du maintien de la tension aux bornes des auxiliaires.

Un autre problème à résoudre pour la régulation d'un tel système est de maintenir la puissance en sortie du convertisseur continu-continu 5 dans le cas de la décharge de la batterie et de maintenir la puissance en entrée du convertisseur continu-continu 5 dans le cas de la charge de la batterie en dépit des appels de courant des auxiliaires $I_{aux}$ et de l'onduleur $I_{onduleur}$ afin de prendre en compte la singularité lorsque les courants en entrée ou en sortie du convertisseur s'annulent.

Un objet de l'invention est un procédé de commande d'un convertisseur continu-continu réversible d'un véhicule automobile muni d'un groupe motopropulseur comprenant un moteur à combustion interne connecté mécaniquement à une machine électrique alimentée par un onduleur, l'onduleur étant connecté électriquement à au moins une batterie par l'intermédiaire du convertisseur continu-continu réversible, le convertisseur continu-continu étant par ailleurs connecté à des équipements auxiliaires. Ladite au moins une batterie est par exemple une batterie haute tension (48V) formée de deux batteries disposées en série dont l'une est utilisée comme batterie basse tension (14V). Le procédé comprend les étapes suivantes :

On détermine l'écart entre une consigne et une estimation de la puissance aux bornes du convertisseur continu-continu, et

On détermine une consigne de tension aux bornes du convertisseur continu-continu en fonction de l'écart déterminé, et d'une valeur de tolérance de sorte que la consigne de tension soit déterminable lorsque le courant circulant aux bornes du convertisseur continu-continu est nul. Cette valeur de tolérance correspond à l'écart maximal que l'on peut admettre par rapport à la consigne de puissance du convertisseur continu-continu.

Si la consigne de puissance est positive ou nulle de sorte que l'on charge au moins une batterie, on peut estimer la puissance aux bornes du convertisseur continu-continu comme le produit du courant de sortie du convertisseur continu-continu par la tension aux bornes d'une batterie à basse tension, on peut déterminer que la valeur minimale de la tension aux bornes du convertisseur continu-continu est égale à la tension minimale aux bornes de la batterie à basse tension et que la valeur maximale de la tension aux bornes du convertisseur continu-continu (5) est égale à la tension maximale aux bornes de la batterie à basse tension, et

si la consigne de puissance est négative de sorte que l'on alimente l'onduleur, on peut estimer la puissance aux bornes du convertisseur continu-continu comme le produit du courant en entrée du convertisseur continu-continu par la tension aux bornes de l'onduleur, on peut déterminer que la valeur minimale de la tension aux bornes du convertisseur continu-continu est égale à la tension minimale aux bornes de l'onduleur et que la valeur maximale de la tension aux bornes du convertisseur continu-continu est égale à la tension maximale aux bornes de l'onduleur.

On peut déterminer si l'écart estimé est supérieur à la valeur de tolérance, si tel est le cas, on peut déterminer que la consigne de tension aux bornes du convertisseur continu-continu est égale à la valeur minimale de la tension aux bornes du convertisseur continu-continu,

si tel n'est pas le cas, on détermine si l'écart estimé est inférieur à l'opposée de la valeur de tolérance, si tel est le cas, on peut déterminer que la consigne de tension aux bornes du convertisseur continu-continu est égale à la valeur maximale de la tension aux bornes du convertisseur continu-continu,

si la valeur absolue de l'écart estimé est inférieure ou égale à la valeur de tolérance, on peut déterminer que la consigne de tension aux bornes du convertisseur continu-continu est égale à une combinaison linéaire de la valeur minimale et de la valeur maximale de la tension aux bornes du convertisseur continu-continu pondérées par l'écart estimé et la valeur de tolérance, la valeur de la consigne de tension ainsi déterminée variant entre la valeur minimale et la valeur maximale de la tension aux bornes du convertisseur continu-continu selon la valeur de l'écart estimé par rapport à la valeur de tolérance.

On peut déterminer un premier coefficient en fonction de l'écart estimé et de la valeur de tolérance, on peut déterminer un deuxième coefficient en fonction de la consigne de tension aux bornes du convertisseur continu-continu ainsi que de la valeur minimale et de la valeur maximale de la tension aux bornes du convertisseur continu-continu, on peut déterminer un facteur de correction issu de l'intégration temporelle du produit du premier coefficient, du deuxième coefficient et de l'écart estimé, et on peut additionner le facteur de correction à la consigne de tension aux bornes du convertisseur continu-continu.

On peut déterminer si la valeur absolue de l'écart estimé est inférieure ou égale à la valeur de tolérance, si tel est le cas, on peut déterminer que le premier coefficient est égal à une valeur de référence mémorisée, et si tel n'est pas le cas, on peut déterminer que le premier coefficient est nul.

On peut déterminer si la consigne de tension aux bornes du convertisseur continu-continu est supérieure ou égale à la valeur maximale de la tension aux bornes du convertisseur continu-continu, si tel est le cas, on peut déterminer que le deuxième coefficient est nul. Si tel n'est pas le cas, on peut déterminer si la consigne de tension aux bornes du convertisseur continu-continu est inférieure ou égale à la valeur minimale de la tension aux bornes du convertisseur continu-continu, si la consigne de tension est supérieure à la valeur minimale et inférieure à la valeur maximale, on peut déterminer que le deuxième coefficient est nul, et si tel n'est pas le cas, on peut déterminer que le deuxième coefficient est égal à la valeur un.

On peut saturer la consigne de tension aux bornes du convertisseur continu-continu de sorte qu'elle soit comprise entre la valeur minimale et la valeur maximale de la tension aux bornes du convertisseur continu-continu, la consigne de tension aux bornes du convertisseur continu-continu étant issue de l'étape de détermination de la consigne ou de l'étape de correction de la consigne.

Un autre objet de l'invention est un système de commande d'un convertisseur continu-continu réversible d'un véhicule automobile muni d'un groupe motopropulseur comprenant un moteur à combustion interne connecté mécaniquement à une machine électrique alimentée par un onduleur, l'onduleur étant connecté électriquement à au moins une batterie par l'intermédiaire du convertisseur continu-continu réversible, le convertisseur continu-continu étant par ailleurs connecté à des équipements auxiliaires. Le système comprend un moyen de détermination du signe de la consigne de puissance au niveau du convertisseur continu-continu, un moyen d'estimation de la puissance aux bornes du convertisseur continu-continu en fonction du signe de la consigne de puissance, du courant en sortie du convertisseur continu-continu, de la tension d'une batterie basse tension, du courant d'entrée du convertisseur continu-continu, et de la tension aux bornes de l'onduleur, le moyen d'estimation étant également apte à déterminer la valeur maximale et la valeur minimale de la tension aux bornes du convertisseur continu-continu en fonction du signe de la consigne de puissance, et des valeurs maximales et minimales de la tension de la batterie basse tension ainsi que de la tension aux bornes de l'onduleur, un soustracteur apte à déterminer un écart entre l'estimation de la puissance du convertisseur continu-continu et la consigne de puissance au niveau du convertisseur continu-continu, et un moyen de détermination de la consigne de tension aux bornes du convertisseur continu-continu recevant en entrée la valeur de l'écart, une valeur de tolérance et les valeurs maximales et minimales de la tension aux bornes du convertisseur continu-continu.

Le système peut comprendre un moyen de détermination d'un premier coefficient en fonction de l'écart et de la valeur de tolérance, et un moyen de détermination d'un deuxième coefficient en fonction de la consigne de tension aux bornes du convertisseur continu-continu et des valeurs maximale et minimale de la tension aux bornes du convertisseur continu-continu, un multiplicateur apte à réaliser le produit du premier coefficient par le deuxième coefficient par l'écart, un intégrateur apte à déterminer un facteur de correction par intégration du produit ainsi obtenu par rapport au temps, un sommateur apte à déterminer une consigne corrigée de tension aux bornes du convertisseur continu-continu en sommant le facteur de correction à la consigne de tension aux bornes du convertisseur continu-continu, la consigne corrigée étant alors substituée à la consigne en entrée du moyen de détermination du deuxième coefficient.

Le système peut également comprendre un moyen de saturation apte à limiter la consigne de tension aux bornes du convertisseur continu-continu ou la consigne corrigée de tension aux bornes du convertisseur continu-continu à des valeurs comprises entre la valeur maximale et la valeur minimale de la tension aux bornes du convertisseur continu-continu, la consigne limitée étant ensuite transmise à un moyen de commande du convertisseur continu-continu.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'un groupe motopropulseur électrifié par SED,
- la figure 2 illustre les principales étapes d'un procédé de commande d'un convertisseur continu-continu d'un tel groupe motopropulseur,
- la figure 3 illustre les principales étapes d'un procédé de commande d'un convertisseur continu-continu d'un tel groupe motopropulseur muni d'une boucle de correction, et
- la figure 4 illustre les principaux éléments d'un système de commande d'un convertisseur continu-continu d'un tel groupe motopropulseur muni d'une boucle de correction.

Comme présenté en introduction, l'annulation des courants d'entrée ou de sortie du convertisseur continu-continu 5 crée une singularité qui doit être prise en compte dans la commande de ce dernier.

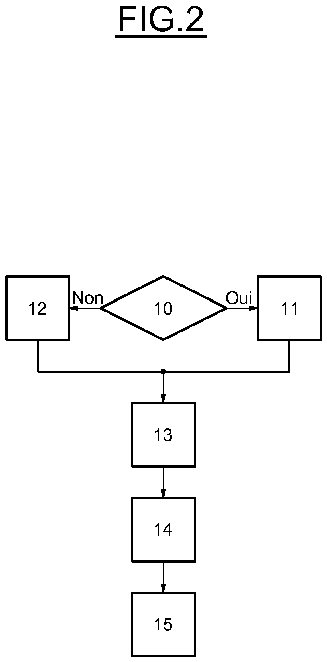

La solution proposée consiste en une stratégie robuste qui rejette les entrées exogènes $I_{aux}$ et $I_{onduleur}$ et qui prend en considération le fait que $I_{dcdc}^{in}$ et $I_{dcdc}^{out}$ sont susceptibles de s'annuler. Une telle solution est intégrée au procédé de commande illustré par la figure 2 qui comprend les étapes suivantes.

Dans une première étape 10, on vérifie si la consigne de puissance $P_{dcdc}^{\#}$ (déterminée par la loi de gestion énergétique LGE du véhicule) au niveau du convertisseur continu-continu 5 est positive ou négative. Si elle est positive ou nulle, le procédé se poursuit par une étape 11. Si elle est négative, le procédé se poursuit par une étape 12.

L'étape 11 correspond au cas de la charge des batteries. Au cours de cette étape, on détermine une estimation $P_{dcdc}$ de la puissance aux bornes du convertisseur continu-continu 5 en réalisant le produit du courant $I_{dcdc}^{out}$ en sortie du convertisseur continu-continu 5 par la tension $V_{lto}$ de la batterie basse tension. On détermine également que la valeur minimale $V_{dcdc}^{min}$ de la tension du convertisseur continu-continu 5 est égale à la valeur minimale $V_{lto}^{min}$ de la tension de la batterie basse tension. On détermine aussi que la valeur maximale $V_{dcdc}^{max}$ de la tension du convertisseur continu-continu 5 est égale à la valeur maximale $V_{lto}^{max}$ de la tension de la batterie basse tension.

L'étape 12 correspond au cas de la décharge des batteries. Au cours de cette étape, on détermine une estimation $P_{dcdc}$ de la puissance en entrée du convertisseur continu-continu 5 en réalisant le produit du courant $I_{dcdc}^{in}$ d'entrée du convertisseur continu-continu 5 par la tension $V_{hv}$ aux bornes de l'onduleur 4. On détermine également que la valeur minimale $V_{dcdc}^{min}$ de la tension du convertisseur continu-continu est égale à la valeur minimale $V_{hv}^{min}$ de la tension aux bornes de l'onduleur. On détermine aussi que la valeur maximale $V_{dcdc}^{max}$ de la tension du convertisseur continu-continu est égale à la valeur maximale $V_{hv}^{\max}$ de la tension aux bornes de l'onduleur.

Au cours d'une quatrième étape 13, on détermine un écart $\sigma$ entre l'estimation de la puissance en entrée du convertisseur continu-continu 5 et la consigne de puissance $P_{dcdc}^{\#}$ au niveau du convertisseur continu-continu 5.

Lors d'une étape 14, on détermine si l'écart $\sigma$ est supérieur à la valeur de tolérance $\varepsilon$ (Plus cette valeur est grande, plus la commande est lisse). Si tel est le cas, on détermine que la consigne $V_{dcdc}^{calc}$ de tension aux bornes du convertisseur continu-continu est égale à la valeur $V_{dcdc}^{\min}$. minimale de la tension aux bornes du convertisseur continu-continu. Si tel n'est pas le cas, on détermine si l'écart $\sigma$ est inférieur à l'opposée de la valeur de tolérance $\varepsilon$. Si tel est le cas, on détermine que la consigne $V_{dcdc}^{calc}$ de tension aux bornes du convertisseur continu-continu est égale à la valeur maximale $V_{dcdc}^{\max}$ de la tension aux bornes du convertisseur continu-continu. Si la valeur absolue de l'écart $\sigma$ est inférieure ou égale à la valeur de tolérance $\varepsilon$, on détermine la consigne $V_{dcdc}^{calc}$ de tension aux bornes du convertisseur continu-continu par application de l'équation suivante :

$$V_{dcdc}^{calc} = \frac{(\sigma + \varepsilon)V_{dcdc}^{min} - (\sigma - \varepsilon)V_{dcdc}^{max}}{2\varepsilon} \qquad (Eq.\ 2)$$

$\varepsilon$ est la valeur de tolérance par rapport à l'écart entre la consigne de puissance du convertisseur et la puissance mesurée qu'il fournit, exprimée en Watt. Dans ce mode de réalisation de l'invention cette valeur de tolérance est de l'ordre de 200W.

A l'étape 15, on détermine si la consigne $V_{dcdc}^{calc}$ de tension aux bornes du convertisseur continu-continu est comprise entre la valeur minimale $V_{dcdc}^{\min}$ et la valeur maximale $V_{dcdc}^{\max}$ de la tension aux bornes du convertisseur continu-continu.

Si tel n'est pas le cas, on sature la consigne $V_{dcdc}^{calc}$ de tension aux bornes du convertisseur continu-continu avant d'émettre en sortie une consigne limitée de tension $V_{dcdc}^{\#}$ appliquée au convertisseur continu-continu.

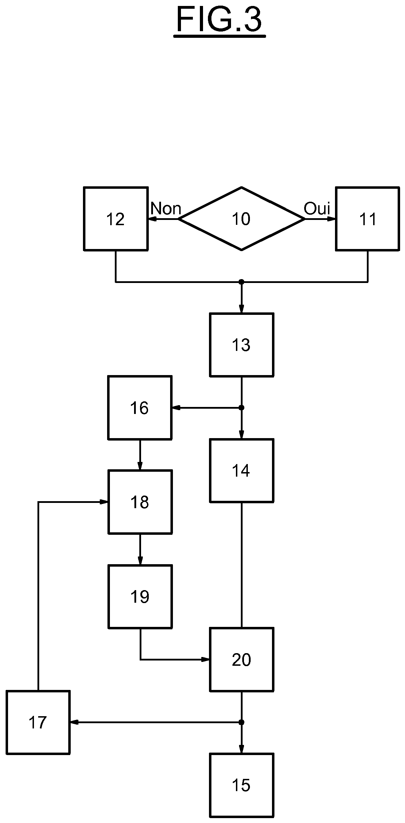

Par ailleurs, on peut améliorer la convergence de la commande de sorte à éliminer l'erreur statique en ajoutant une boucle de correction entre la détermination de la consigne $V_{dcdc}^{calc}$ de tension aux bornes du convertisseur continu-continu à l'étape 14 et la saturation à l'étape 15. La figure 3 illustre un procédé comprenant une telle boucle. Les étapes communes avec le procédé décrit ci-dessus portent les mêmes références et ne sont pas décrites à nouveau pour la concision de la description.

Pour réaliser la boucle de correction, on ajoute les étapes suivantes au procédé de commande.

Au cours d'une étape 16, on détermine si la valeur absolue de l'écart $\sigma$ est inférieure ou égale à la valeur de tolérance $\varepsilon$. Si tel est le cas, on détermine que la valeur d'un premier coefficient $K_i$ est égale à une valeur de consigne $K_i^{\#}$ déterminée empiriquement. Si tel n'est pas le cas, on détermine que la valeur du coefficient $K_i$ est nulle.

A l'étape 17, on détermine si la consigne $V_{dcdc}^{calc}$ de tension aux bornes du convertisseur continu-continu est supérieure ou égale à la valeur maximale $V_{dcdc}^{\max}$ de la tension aux bornes du convertisseur continu-continu, ou si la consigne $V_{dcdc}^{calc}$ de tension aux bornes du convertisseur continu-continu est inférieure ou égale à la valeur minimale $V_{dcdc}^{\min}$ de la tension aux bornes du convertisseur continu-continu. Si tel est le cas, on détermine qu'un deuxième coefficient G est égal à 0. Si tel n'est pas le cas, le deuxième coefficient G est égal à 1.

A l'étape 18, on réalise le produit du coefficient G par le coefficient $K_i$ par l'écart $\sigma$.

A l'étape 19, on détermine un facteur de correction $\delta$ par intégration du produit $G.K_i.\sigma$ par rapport au temps.

Il apparaît donc que le premier coefficient $K_i$ permet de déterminer si l'écart $\sigma$ se trouve dans la gamme de valeurs souhaitée de -ε à +ε. Si tel n'est pas le cas, l'intégration est interrompue en annulant le terme à intégrer.

De même, le deuxième coefficient G permet de détecter la saturation de la consigne $V_{dcdc}^{calc}$ de tension aux bornes du convertisseur continu-continu et si tel est le cas, d'interrompre l'intégration en annulant le terme à intégrer.

A l'étape 20, on somme le facteur de correction δ avec la consigne $V_{dcdc}^{calc}$ de tension aux bornes du convertisseur continu-continu pour obtenir une consigne corrigée $V_{dcdc}^{cor}$ de tension aux bornes du convertisseur continu-continu. Dans ce cas, la consigne corrigée $V_{dcdc}^{cor}$ de tension aux bornes du convertisseur continu-continu est substituée à la consigne $V_{dcdc}^{calc}$ de tension aux bornes du convertisseur continu-continu pour l'étape 15 de saturation et pour l'étape 17 de détermination du deuxième coefficient G.

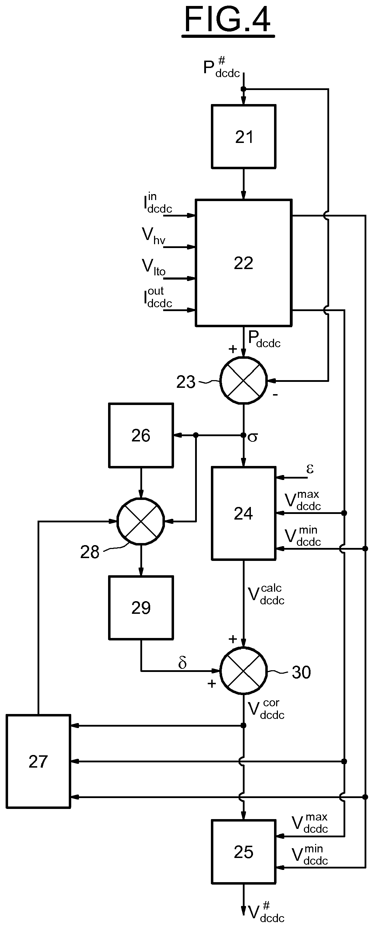

La figure 4 illustre un système de commande du convertisseur continu-continu décrit sur la figure 1. Le système de commande comprend un moyen de détermination 21 du signe de la consigne de puissance au niveau du convertisseur continu-continu 5, connecté en sortie à un moyen d'estimation 22 de la puissance aux bornes du convertisseur continu-continu 5 en fonction du signe de la consigne de puissance, du courant $I_{dcdc}^{out}$ en sortie du convertisseur continu-continu 5, de la tension $V_{lto}$ de la batterie basse tension, du courant $I_{dcdc}^{in}$ d'entrée du convertisseur continu-continu 5, et de la tension $V_{hv}$ aux bornes de l'onduleur 4. Le moyen d'estimation 22 est également apte à déterminer la valeur maximale $V_{dcdc}^{max}$ et la valeur minimale $V_{dcdc}^{min}$ de la tension aux bornes du convertisseur continu-continu en fonction du signe de la consigne de puissance, et des valeurs maximales et minimales de la tension $V_{lto}$ de la batterie basse tension ainsi que de la tension $V_{hv}$ aux bornes de l'onduleur 4.

Un soustracteur 23 détermine un écart σ en fonction de l'estimation de la puissance en entrée du convertisseur continu-continu 5 et la consigne de puissance $P_{dcdc}^{\#}$ au niveau du convertisseur continu-continu 5.

Le système comprend un moyen de détermination 24 de la consigne $V_{dcdc}^{calc}$ de tension aux bornes du convertisseur continu-continu recevant en entrée la valeur de l'écart σ, une valeur de tolérance ε et les valeurs maximales et minimales de la tension aux bornes du convertisseur continu-continu.

La consigne $V_{dcdc}^{calc}$ de tension aux bornes du convertisseur continu-continu est ensuite transmise à un moyen de saturation 25 qui limite la consigne $V_{dcdc}^{calc}$ de tension aux bornes du convertisseur continu-continu à des valeurs comprises entre la valeur maximale et la valeur minimale de la tension aux bornes du convertisseur continu-continu. La consigne limitée $V_{dcdc}^{\#}$ est ensuite transmise au moyen de commande du convertisseur continu-continu.

Selon un autre mode de réalisation, le système de commande décrit ci-dessus est muni d'une boucle de correction apte à améliorer la convergence de la commande.

Le système de commande comprend alors un moyen de détermination 26 d'un premier coefficient en fonction de l'écart σ et de la valeur de tolérance ε et un moyen de détermination 27 d'un deuxième coefficient en fonction de la consigne de tension aux bornes du convertisseur continu-continu et des valeurs maximale et minimale de la tension aux bornes du convertisseur continu-continu.

Un multiplicateur 28 réalise le produit du premier coefficient, par le deuxième coefficient par l'écart ε

Un intégrateur 29 détermine un facteur de correction δ par intégration du produit ainsi obtenu par rapport au temps.

Un sommateur 30 détermine une consigne corrigée $V_{dcdc}^{cor}$ de tension aux bornes du convertisseur continu-continu en sommant le facteur de correction δ à la consigne $V_{dcdc}^{calc}$ de tension aux bornes du convertisseur continu-continu.

La consigne corrigée est alors substituée à la consigne en entrée du moyen de saturation 25 et du moyen de détermination 27 du deuxième coefficient.

Le procédé et le système décrits ci-dessus permettent de faire face aux incertitudes dues à la méconnaissance de la dynamique et de l'amplitude des entrées $I_{onduleur}$ et $I_{aux}$. Le procédé permet également le maintien de la puissance du convertisseur continu-continu 5 à une puissance de référence et ceci en rejetant les perturbations dues aux courants

$I_{onduleur}$ et $I_{aux}$. Par ailleurs, le procédé permet également de calculer la tension de consigne du convertisseur continu-continu 5 lorsque le courant à ses bornes s'annule.

**Revendications**

1. Procédé de commande d'un convertisseur continu-continu réversible d'un véhicule automobile muni d'un groupe motopropulseur comprenant un moteur à combustion interne (2) connecté mécaniquement à une machine électrique (3) alimentée par un onduleur (4), l'onduleur (4) étant connecté électriquement en sortie à une batterie basse tension (7) par l'intermédiaire du convertisseur continu-continu (5) réversible situé entre ladite batterie basse tension (7) et l'onduleur lui-même connecté à une batterie haute tension (6), le convertisseur continu-continu (5) étant par ailleurs connecté en sortie à des équipements auxiliaires, le procédé comportant les étapes suivantes :

   on détermine l'écart entre une consigne de puissance ($P^{\#}_{dcdc}$) et une estimation de la puissance aux bornes du convertisseur continu-continu (5), et
   on détermine une consigne de tension aux bornes du convertisseur continu-continu (5) en fonction de l'écart déterminé, et d'une valeur de tolérance ($\varepsilon$) dudit écart de sorte que la consigne de tension soit déterminable lorsque le courant circulant aux bornes du convertisseur continu-continu est nul,
   si la consigne de puissance est positive ou nulle de sorte que l'on charge la batterie basse tension, on estime la puissance en sortie aux bornes du convertisseur continu-continu (5) comme le produit du courant de sortie $\left( I^{out}_{dcdc} \right)$ du convertisseur continu-continu (5) par la tension ($V_{lto}$) aux bornes de la batterie à basse tension,
   on détermine que la valeur minimale de la tension aux bornes du convertisseur continu-continu (5) est égale à la tension minimale $\left( V^{min}_{lto} \right)$ aux bornes de la batterie à basse tension et que la valeur maximale de la tension aux bornes du convertisseur continu-continu (5) est égale à la tension maximale $\left( V^{max}_{lto} \right)$ aux bornes de la batterie à basse tension, et
   si la consigne de puissance est négative de sorte que l'on alimente l'onduleur, on estime la puissance en entrée aux bornes du convertisseur continu-continu comme le produit du courant en entrée $\left( I^{in}_{dcdc} \right)$ du convertisseur continu-continu (5) par la tension aux bornes de l'onduleur (4), on détermine que la valeur minimale de la tension aux bornes du convertisseur continu-continu (5) est égale à la tension minimale aux bornes de l'onduleur (4) et que la valeur maximale de la tension aux bornes du convertisseur continu-continu (5) est égale à la tension maximale aux bornes de l'onduleur (4),
   on détermine si l'écart estimé est supérieur à la valeur de tolérance, si tel est le cas, on détermine que la consigne de tension aux bornes du convertisseur continu-continu (5) est égale à la valeur minimale de la tension aux bornes du convertisseur continu-continu (5),
   si tel n'est pas le cas, on détermine si l'écart estimé est inférieur à l'opposée de la valeur de tolérance, si tel est le cas, on détermine que la consigne de tension aux bornes du convertisseur continu-continu (5) est égale à la valeur maximale de la tension aux bornes du convertisseur continu-continu (5),
   si la valeur absolue de l'écart estimé est inférieure ou égale à la valeur de tolérance, on détermine que la consigne de tension aux bornes du convertisseur continu-continu (5) est égale à une combinaison linéaire de la valeur minimale et de la valeur maximale de la tension aux bornes du convertisseur continu-continu (5) pondérées par l'écart estimé et la valeur de tolérance, la valeur de la consigne de tension ainsi déterminée variant entre la valeur minimale et la valeur maximale de la tension aux bornes du convertisseur continu-continu (5) selon la valeur de l'écart estimé par rapport à la valeur de tolérance.

2. Procédé selon la revendication précédente, dans lequel on détermine un premier coefficient (Ki) en fonction de l'écart estimé et de la valeur de tolérance,
   on détermine un deuxième coefficient (G) en fonction de la consigne de tension aux bornes du convertisseur continu-continu ainsi que de la valeur minimale et de la valeur maximale de la tension aux bornes du convertisseur continu-continu,
   on détermine un facteur de correction ($\delta$) issu de l'intégration temporelle du produit du premier coefficient (Ki), du deuxième coefficient (G) et de l'écart estimé ($\sigma$), et
   on additionne le facteur de correction ($\delta$) à la consigne de tension aux bornes du convertisseur continu-continu (5).

3. Procédé selon la revendication 2, dans lequel on détermine si la valeur absolue de l'écart estimé ($\sigma$) est inférieure ou égale à la valeur de tolérance ($\varepsilon$), si tel est le cas, on détermine que le premier coefficient (Ki) est égal à une valeur de référence mémorisée, et si tel n'est pas le cas, on détermine que le premier coefficient (Ki) est nul.

4. Procédé selon l'une quelconque des revendications 2 ou 3, dans lequel on détermine si la consigne de tension aux bornes du convertisseur continu-continu est supérieure ou égale à la valeur maximale de la tension aux bornes du convertisseur continu-continu, si tel est le cas, on détermine que le deuxième coefficient (G) est nul,
si tel n'est pas le cas, on détermine si la consigne de tension aux bornes du convertisseur continu-continu est inférieure ou égale à la valeur minimale de la tension aux bornes du convertisseur continu-continu, si tel est le cas, on détermine que le deuxième coefficient (G) est nul, et
si la consigne de tension est supérieure à la valeur minimale et inférieure à la valeur maximale, on détermine que le deuxième coefficient (G) est égal à la valeur un.

5. Procédé selon l'une quelconque des revendications précédentes, dans lequel on sature la consigne de tension aux bornes du convertisseur continu-continu de sorte qu'elle soit comprise entre la valeur minimale et de la valeur maximale de la tension aux bornes du convertisseur continu-continu, la consigne de tension aux bornes du convertisseur continu-continu étant issue de l'étape de détermination de la consigne ou de l'étape de correction de la consigne.

6. Système de commande d'un convertisseur continu-continu réversible d'un véhicule automobile muni d'un groupe motopropulseur comprenant un moteur à combustion interne (2) connecté mécaniquement à une machine électrique (3) alimentée par un onduleur (4), l'onduleur (4) étant connecté électriquement en sortie à une batterie basse tension (7) par l'intermédiaire du convertisseur continu-continu (5) réversible situé entre ladite batterie basse tension (7) et l'onduleur lui-même connecté à une batterie haute tension (6), le convertisseur continu-continu (5) étant par ailleurs connecté en sortie à des équipements auxiliaires (8), le système comprenant également un moyen de détermination (21) du signe de la consigne de puissance ($P^{\#}_{dcdc}$) au niveau du convertisseur continu-continu (5),
un moyen d'estimation (22) de la puissance aux bornes du convertisseur continu-continu (5) en fonction du signe de la consigne de puissance, du courant en sortie du convertisseur continu-continu (5), de la tension de la batterie basse tension, du courant d'entrée du convertisseur continu-continu (5), et de la tension aux bornes de l'onduleur (4), le moyen d'estimation (22) étant également apte à déterminer la valeur maximale et la valeur minimale de la tension aux bornes du convertisseur continu-continu en fonction du signe de la consigne de puissance, et des valeurs maximales et minimales de la tension de la batterie basse tension ainsi que de la tension aux bornes de l'onduleur (4),
un soustracteur apte à déterminer un écart entre l'estimation de la puissance du convertisseur continu-continu (5) et la consigne de puissance au niveau du convertisseur continu-continu (5),
un moyen de détermination (24) de la consigne de tension aux bornes du convertisseur continu-continu recevant en entrée la valeur de l'écart, une valeur de tolérance ($\varepsilon$) dudit écart et les valeurs maximales et minimales de la tension aux bornes du convertisseur continu-continu.

7. Système selon la revendication 6, comprenant un moyen de détermination (26) d'un premier coefficient (Ki) en fonction de l'écart ($\sigma$) et de la valeur de tolérance ($\varepsilon$), et un moyen de détermination (27) d'un deuxième coefficient (G) en fonction de la consigne de tension aux bornes du convertisseur continu-continu et des valeurs maximale et minimale de la tension aux bornes du convertisseur continu-continu,
un multiplicateur (28) apte à réaliser le produit du premier coefficient (Ki) par le deuxième coefficient (G) par l'écart ($\sigma$),
un intégrateur (29) apte à déterminer un facteur de correction ($\delta$) par intégration du produit ainsi obtenu par rapport au temps, et
un sommateur (30) apte à déterminer une consigne corrigée de tension aux bornes du convertisseur continu-continu en sommant le facteur de correction ($\delta$) à la consigne de tension aux bornes du convertisseur continu-continu, la consigne corrigée étant alors substituée à la consigne en entrée du moyen de détermination (27) du deuxième coefficient (G).

8. Système selon l'une quelconque des revendications 6 ou 7, comprenant un moyen de saturation (25) apte à limiter la consigne de tension aux bornes du convertisseur continu-continu ou la consigne corrigée de tension aux bornes du convertisseur continu-continu à des valeurs comprises entre la valeur maximale et la valeur minimale de la tension aux bornes du convertisseur continu-continu, la consigne limitée étant ensuite transmise à un moyen de commande du convertisseur continu-continu.

**Patentansprüche**

1. Verfahren zur Steuerung eines umkehrbaren Gleichstrom-Gleichstrom-Wandlers eines Kraftfahrzeugs, das mit einem Antrieb ausgestattet ist, der einen Verbrennungsmotor (2) umfasst, der mechanisch mit einer elektrischen Maschine (3) verbunden ist, die von einem Wechselrichter (4) gespeist wird, wobei der Wechselrichter (4) im Ausgang elektrisch mit einer Niederspannungsbatterie (7) über den umkehrbaren Gleichstrom-Gleichstrom-Wandler (5) verbunden ist, der zwischen der Niederspannungsbatterie (7) und dem Wechselrichter angeordnet ist, der seinerseits mit einer Hochspannungsbatterie (6) verbunden ist, wobei der Gleichstrom-Gleichstrom-Wandler (5) im Übrigen im Ausgang mit Hilfsvorrichtungen verbunden ist, wobei das Verfahren die folgenden Schritte umfasst:

   man bestimmt die Abweichung zwischen einem Leistungssollwert ($P^{\#}_{dcdc}$) und einer Schätzung der Leistung an den Klemmen des Gleichstrom-Gleichstrom-Wandlers (5) und
   man bestimmt einen Spannungssollwert an den Klemmen des Gleichstrom-Gleichstrom-Wandlers (5) in Abhängigkeit von der bestimmten Abweichung und von einem Toleranzwert ($\varepsilon$) der Abweichung, so dass der Spannungssollwert bestimmbar ist, wenn der an den Klemmen des Gleichstrom-Gleichstrom-Wandlers fließende Strom null ist,
   man schätzt, falls der Leistungssollwert positiv oder null ist, so dass die Niederspannungsbatterie geladen wird, die Ausgangsleistung an den Klemmen des Gleichstrom-Gleichstrom-Wandlers (5) als das Produkt aus dem Ausgangsstrom ($I^{out}_{dcdc}$) des Gleichstrom-Gleichstrom-Wandlers (5) und der Spannung ($V_{lto}$) an den Klemmen der Niederspannungsbatterie, man bestimmt, dass der Mindestwert der Spannung an den Klemmen des Gleichstrom-Gleichstrom-Wandlers (5) gleich der Mindestspannung ($V^{min}_{lto}$) an den Klemmen der Niederspannungsbatterie ist und dass der Höchstwert der Spannung an den Klemmen des Gleichstrom-Gleichstrom-Wandlers (5) gleich der maximalen Spannung ($V^{max}_{lto}$) an den Klemmen der Niederspannungsbatterie ist, und
   man schätzt, falls der Leistungssollwert negativ ist, so dass der Wechselrichter gespeist wird, die Eingangsleistung an den Klemmen des Gleichstrom-Gleichstrom-Wandlers als das Produkt aus dem Eingangsstrom ($I^{in}_{dcdc}$) des Gleichstrom-Gleichstrom-Wandlers (5) und der Spannung an den Klemmen des Wechselrichters (4), man bestimmt, dass der Mindestwert der Spannung an den Klemmen des Gleichstrom-Gleichstrom-Wandlers (5) gleich der Mindestspannung an den Klemmen des Wechselrichters (4) ist und dass der Höchstwert der Spannung an den Klemmen des Gleichstrom-Gleichstrom-Wandlers (5) gleich der maximalen Spannung an den Klemmen des Wechselrichters (4) ist,
   man bestimmt, ob die geschätzte Abweichung über dem Toleranzwert liegt, man bestimmt, falls dies der Fall ist, dass der Spannungssollwert an den Klemmen des Gleichstrom-Gleichstrom-Wandlers (5) gleich dem Mindestwert der Spannung an den Klemmen des Gleichstrom-Gleichstrom-Wandlers (5) ist,
   man bestimmt, falls dies nicht der Fall ist, ob die geschätzte Abweichung unter der Inversen des Toleranzwerts liegt, man bestimmt, falls dies der Fall ist, dass der Spannungssollwert an den Klemmen des Gleichstrom-Gleichstrom-Wandlers (5) gleich dem Höchstwert der Spannung an den Klemmen des Gleichstrom-Gleichstrom-Wandlers (5) ist,
   man bestimmt, falls der Absolutwert der geschätzten Abweichung kleiner als oder gleich dem Toleranzwert ist, dass der Spannungssollwert an den Klemmen des Gleichstrom-Gleichstrom-Wandlers (5) gleich einer linearen Kombination des Mindestwerts und des Höchstwerts der Spannung an den Klemmen des Gleichstrom-Gleichstrom-Wandlers (5), gewichtet durch die geschätzte Abweichung des Toleranzwerts, ist, wobei der Wert des so bestimmten Spannungssollwerts zwischen dem Mindestwert und dem Höchstwert der Spannung an den Klemmen des Gleichstrom-Gleichstrom-Wandlers (5) gemäß dem Wert der in Bezug auf den Toleranzwert geschätzten Abweichung variiert.

2. Verfahren nach dem vorhergehenden Anspruch, bei dem man einen ersten Koeffizienten (Ki) in Abhängigkeit von der geschätzten Abweichung und vom Toleranzwert bestimmt,
   man einen zweiten Koeffizienten (G) in Abhängigkeit vom Spannungssollwert an den Klemmen des Gleichstrom-Gleichstrom-Wandlers sowie vom Mindestwert und vom Höchstwert der Spannung an den Klemmen des Gleichstrom-Gleichstrom-Wandlers bestimmt,
   man einen Korrekturfaktor ($\delta$) bestimmt, der aus der zeitlichen Integration des Produkts aus dem ersten Koeffizienten (Ki), dem zweiten Koeffizienten (G) und der geschätzten Abweichung (o) hervorgeht, und
   man den Korrekturfaktor ($\delta$) zum Spannungssollwert an den Klemmen des Gleichstrom-Gleichstrom-Wandlers (5) addiert.

**3.** Verfahren nach Anspruch 2, bei dem man bestimmt, ob der Absolutwert der geschätzten Abweichung (o) kleiner als oder gleich dem Toleranzwert ($\varepsilon$) ist, man, falls dies der Fall ist, bestimmt, dass der erste Koeffizient (Ki) gleich einem gespeicherten Referenzwert ist, und man, falls dies nicht der Fall ist, bestimmt, dass der erste Koeffizient (Ki) null ist.

**4.** Verfahren nach einem der Ansprüche 2 oder 3, bei dem man bestimmt, ob der Spannungssollwert an den Klemmen des Gleichstrom-Gleichstrom-Wandlers größer als oder gleich dem Höchstwert der Spannung an den Klemmen des Gleichstrom-Gleichstrom-Wandlers ist, man, falls dies der Fall ist, bestimmt, dass der zweite Koeffizient (G) null ist,

man, falls dies nicht der Fall ist, bestimmt, ob der Spannungssollwert an den Klemmen des Gleichstrom-Gleichstrom-Wandlers kleiner als oder gleich dem Mindestwert der Spannung an den Klemmen des Gleichstrom-Gleichstrom-Wandlers ist, man, falls dies der Fall ist, bestimmt, dass der zweite Koeffizient (G) null ist, und

man, falls der Spannungssollwert größer als der Mindestwert und kleiner als der Höchstwert ist, bestimmt, dass der zweite Koeffizient (G) gleich dem Wert eins ist.

**5.** Verfahren nach einem der vorhergehenden Ansprüche, bei dem man den Spannungssollwert an den Klemmen des Gleichstrom-Gleichstrom-Wandlers sättigt, so dass er zwischen dem Mindestwert und dem Höchstwert der Spannung an den Klemmen des Gleichstrom-Gleichstrom-Wandlers liegt, wobei der Spannungssollwert an den Klemmen des Gleichstrom-Gleichstrom-Wandlers aus dem Sollwertbestimmungsschritt oder aus dem Sollwertkorrekturschritt hervorgegangen ist.

**6.** System zur Steuerung eines umkehrbaren Gleichstrom-Gleichstrom-Wandlers eines Kraftfahrzeugs, das mit einem Antrieb ausgestattet ist, der einen Verbrennungsmotor (2) umfasst, der mechanisch mit einer elektrischen Maschine (3) verbunden ist, die von einem Wechselrichter (4) gespeist wird, wobei der Wechselrichter (4) im Ausgang elektrisch mit einer Niederspannungsbatterie (7) über den umkehrbaren Gleichstrom-Gleichstrom-Wandler (5) verbunden ist, der zwischen der Niederspannungsbatterie (7) und dem Wechselrichter angeordnet ist, der seinerseits mit einer Hochspannungsbatterie (6) verbunden ist, wobei der Gleichstrom-Gleichstrom-Wandler (5) im Übrigen im Ausgang mit Hilfsvorrichtungen (8) verbunden ist, wobei das System ferner umfasst:

eine Einrichtung zum Bestimmen (21) des Vorzeichens des Leistungssollwerts ($P^{\#}_{dcdc}$) am Gleichstrom-Gleichstrom-Wandler (5),

eine Einrichtung zum Schätzen (22) der Leistung an den Klemmen des Gleichstrom-Gleichstrom-Wandlers (5) in Abhängigkeit vom Vorzeichen des Leistungssollwerts, vom Ausgangsstrom des Gleichstrom-Gleichstrom-Wandler (5), von der Spannung der Niederspannungsbatterie, vom Eingangsstrom des Gleichstrom-Gleichstrom-Wandlers (5) und von der Spannung an den Klemmen des Wechselrichters (4), wobei die Einrichtung zum Schätzen (22) auch geeignet ist, den Höchstwert und den Mindestwert der Spannung an den Klemmen des Gleichstrom-Gleichstrom-Wandlers in Abhängigkeit vom Vorzeichen des Leistungssollwerts und von den Höchst- und Mindestwerten der Spannung der Niederspannungsbatterie sowie der Spannung an den Klemmen des Wechselrichters (4) zu bestimmen,

einen Subtrahierer, der geeignet ist, eine Abweichung zwischen der Schätzung der Leistung des Gleichstrom-Gleichstrom-Wandlers (5) und dem Leistungssollwert am Gleichstrom-Gleichstrom-Wandler (5) zu bestimmen,

eine Einrichtung zum Bestimmen (24) des Spannungssollwerts an den Klemmen des Gleichstrom-Gleichstrom-Wandlers, die im Eingang den Wert der Abweichung, einen Toleranzwert ($\varepsilon$) der Abweichung und die Höchst- und Mindestwerte der Spannung an den Klemmen des Gleichstrom-Gleichstrom-Wandlers erhält.

**7.** System nach Anspruch 6, umfassend eine Einrichtung zum Bestimmen (26) eines ersten Koeffizienten (Ki) in Abhängigkeit von der Abweichung (o) und vom Toleranzwert ($\varepsilon$) und eine Einrichtung zum Bestimmen (27) eines zweiten Koeffizienten (G) in Abhängigkeit vom Spannungssollwert an den Klemmen des Gleichstrom-Gleichstrom-Wandlers und von den Höchst- und Mindestwerten der Spannung an den Klemmen des Gleichstrom-Gleichstrom-Wandlers,

einen Multiplizierer (28), der geeignet ist, das Produkt des ersten Koeffizienten (Ki) mit dem zweiten Koeffizienten (G) mit der Abweichung (o) zu realisieren,

einen Integrierer (29), der geeignet ist, einen Korrekturfaktor ($\delta$) durch Integration des so erhaltenen Produkts in Bezug auf die Zeit zu bestimmen, und

einen Addierer (30), der geeignet ist, einen korrigierten Spannungssollwert an den Klemmen des Gleichstrom-Gleichstrom-Wandlers zu bestimmen, indem er den Korrekturfaktor ($\delta$) zum Spannungssollwert an den Klemmen des Gleichstrom-Gleichstrom-Wandlers addiert, wobei der korrigierte Sollwert dann den Sollwert im Eingang der Einrichtung zum Bestimmen (27) des zweiten Koeffizienten (G) ersetzt.

**8.** System nach einem der Ansprüche 6 oder 7, umfassend eine Einrichtung zum Sättigen (25), die geeignet ist, den Spannungssollwert an den Klemmen des Gleichstrom-Gleichstrom-Wandlers oder den korrigierten Spannungssollwert an den Klemmen des Gleichstrom-Gleichstrom-Wandlers auf Werte zwischen dem Höchstwert und dem Mindestwert der Spannung an den Klemmen des Gleichstrom-Gleichstrom-Wandlers zu begrenzen, wobei der begrenzte Sollwert anschließend an eine Einrichtung zum Steuern des Gleichstrom-Gleichstrom-Wandlers übertragen wird.

**Claims**

**1.** Method for controlling a reversible DC-DC converter of a motor vehicle equipped with a powertrain comprising an internal combustion engine (2) that is mechanically connected to an electric machine (3) that is supplied with power by an inverter (4), the output of the inverter (4) being electrically connected to a low-voltage battery (7) by way of the reversible DC-DC converter (5), which is located between said low-voltage battery (7) and the inverter, which itself is connected to a high-voltage battery (6), the output of the DC-DC converter (5) moreover being connected to auxiliary equipment, the method comprising the following steps:

determining the discrepancy between a power setpoint (P#dcdc) and an estimation of the power across the terminals of the DC-DC converter (5), and

determining a setpoint of the voltage across the terminals of the DC-DC converter (5) depending on the determined discrepancy, and of a value of a tolerance ($\varepsilon$) in said discrepancy so that the voltage setpoint is determinable when the current flowing through the terminals of the DC-DC converter is zero, if the power setpoint is positive or zero so that the low-voltage battery is being charged, the output power across the terminals of the DC-DC converter (5) is estimated to be the product of the output current ( $I_{dcdc}^{out}$ ) of the DC-DC converter (5) by the voltage ($V_{lto}$) across the terminals of the low-voltage battery, and it is determined that the minimum value of the voltage across the terminals of the DC-DC converter (5) is equal to the minimum voltage $V_{lto}^{\min}$ across the terminals of the low-voltage battery and that the maximum value of the voltage across the terminals of the DC-DC converter (5) is equal to the maximum voltage ( $V_{lto}^{\max}$ ) across the terminals of the low-voltage battery, and

if the power setpoint is negative so that the inverter is being supplied with power, the input power across the terminals of the DC-DC converter is estimated to be the product of the input current ( $I_{dcdc}^{in}$ ) of the DC-DC converter (5) by the voltage across the terminals of the inverter (4), and it is determined that the minimum value of the voltage across the terminals of the DC-DC converter (5) is equal to the minimum voltage across the terminals of the inverter (4) and that the maximum value of the voltage across the terminals of the DC-DC converter (5) is equal to the maximum voltage across the terminals of the inverter (4), it is determined whether the estimated discrepancy is larger than the tolerance value and, if such is the case, it is determined that the setpoint for the voltage across the terminals of the DC-DC converter (5) is equal to the minimum value of the voltage across the terminals of the DC-DC converter (5),

and, if such is not the case, it is determined whether the estimated discrepancy is smaller than the opposite of the tolerance value and, if such is the case, it is determined that the setpoint of the voltage across the terminals of the DC-DC converter (5) is equal to the maximum value of the voltage across the terminals of the DC-DC converter (5),

if the absolute value of the estimated discrepancy is lower than or equal to the tolerance value, it is determined that the setpoint of the voltage across the terminals of the DC-DC converter (5) is equal to a linear combination of the minimum value and of the maximum value of the voltage across the terminals of the DC-DC converter (5) said values being weighted by the estimated discrepancy and the tolerance value, the value of the voltage setpoint thus determined varying between the minimum value and the maximum value of the voltage across the terminals of the DC-DC converter (5) depending on the value of the estimated discrepancy with respect to the tolerance value.

**2.** Method according to the preceding claim, wherein a first coefficient (Ki) is determined depending on the estimated discrepancy and on the tolerance value,

a second coefficient (G) is determined depending on the setpoint of the voltage across the terminals of the DC-DC converter and on the minimum value and maximum value of the voltage across the terminals of the DC-DC converter, a correction factor ($\delta$) resulting from the integration with respect to time of the product of the first coefficient (Ki), of the second coefficient (G) and of the estimated discrepancy (σ), is determined, and
the correction factor (δ) and the setpoint of the voltage across the terminals of the DC-DC converter (5) are summed.

3. Method according to Claim 2, wherein it is determined whether the absolute value of the estimated discrepancy (σ) is lower than or equal to the tolerance value (ε) and, if such is the case, it is determined THAT the first coefficient (Ki) is equal to a reference value stored in memory, and, if such is not the case, it is determined that the first coefficient (Ki) is zero.

4. Method according to either of Claims 2 and 3, wherein it is determined whether the setpoint of the voltage across the terminals of the DC-DC converter is higher than or equal to the maximum value of the voltage across the terminals of the DC-DC converter and, if such is the case, it is determined that the second coefficient (G) is zero, if such is not the case, it is determined whether the setpoint of the voltage across the terminals of the DC-DC converter is lower than or equal to the minimum value of the voltage across the terminals of the DC-DC converter, and, if such is the case, it is determined that the second coefficient (G) is zero, and if the voltage setpoint is higher than the minimum value and lower than the maximum value, it is determined that the second coefficient (G) is equal to the value one.

5. Method according to any one of the preceding claims, wherein the setpoint of the voltage across the terminals of the DC-DC converter is saturated so that it is comprised between the minimum value and the maximum value of the voltage across the terminals of the DC-DC converter, the setpoint of the voltage across the terminals of the DC-DC converter being generated in the step of determining the setpoint or in the step of correcting the setpoint.

6. System for controlling a reversible DC-DC converter of a motor vehicle equipped with a powertrain comprising an internal combustion engine (2) that is mechanically connected to an electric machine (3) that is supplied with power by an inverter (4), the output of the inverter (4) being electrically connected to a low-voltage battery (7) by way of the reversible DC-DC converter (5), which is located between said low-voltage battery (7) and the inverter, which itself is connected to a high-voltage battery (6), the output of the DC-DC converter (5) moreover being connected to auxiliary equipment (8), the system also comprising
a means (21) for determining the sign of the power setpoint ($P^\#$dcdc) of the DC-DC converter (5),
a means (22) for estimating the power at the terminals of the DC-DC converter (5) depending on the sign of the power setpoint, on the current output from the DC-DC converter (5), on the voltage of the low-voltage battery, on the input current of the DC-DC converter (5), and on the voltage across the terminals of the inverter (4), the estimating means (22) also being able to determine the maximum value and the minimum value of the voltage across the terminals of the DC-DC converter depending on the sign of the power setpoint, and on the maximum and minimum values of the voltage of the low-voltage battery and of the voltage across the terminals of the inverter (4),
a subtractor able to determine a discrepancy between the estimation of the power of the DC-DC converter (5) and the power setpoint of the DC-DC converter (5),
a means (24) for determining the setpoint of the voltage across the terminals of the DC-DC converter, receiving as input the value of the discrepancy, a value of the tolerance (ε) in said discrepancy and the maximum and minimum values of the voltage across the terminals of the DC-DC converter.

7. System according to Claim 6, comprising a means (26) for determining a first coefficient (Ki) depending on the discrepancy (σ) and on the tolerance value (ε), and a means (27) for determining a second coefficient (G) depending on the setpoint of the voltage across the terminals of the DC-DC converter and on the maximum and minimum values of the voltage across the terminals of the DC-DC converter,
a multiplier (28) able to find the product of the first coefficient (Ki) by the second coefficient (G) by the discrepancy (σ),
an integrator (29) able to determine a correction factor (δ) by integration of the product thus obtained with respect to time, and
a summer (30) able to determine a corrected setpoint of the voltage across the terminals of the DC-DC converter by summing the correction factor (δ) and the setpoint of the voltage across the terminals of the DC-DC converter, the corrected setpoint then being substituted for the setpoint as input into the means (27) for determining the second coefficient (G).

8. System according to either of Claims 6 and 7, comprising a saturating means (25) able to limit the setpoint of the voltage across the terminals of the DC-DC converter or the corrected setpoint of the voltage across the terminals of the DC-DC converter to values comprised between the maximum value and the minimum value of the voltage across the terminals of the DC-DC converter, the limited setpoint then being transmitted to a means for controlling the DC-DC converter.

FIG.1

# FIG.2

# FIG.3

# FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013182784 A2
- WO 2009074604 A